# FASCICULE DE BREVET EUROPEEN

(11) **EP 2 491 048 B1**
(45) Date de publication et mention de la délivrance du brevet: **23.12.2015**
(21) Numéro de dépôt: 10790580.4
(22) Date de dépôt: 06.10.2010
(51) Int. Cl.: C07F 5/06

(54) **NOUVEAU SOLIDE HYBRIDE ORGANIQUE-INORGANIQUE MIL-53-AL-N3 POURVU D'UNE FONCTION AZOTURE ET SON PROCEDE DE PRÉPARATION**
NEUER ORGANISCHER/ANORGANISCHER MIL-53-AL-N3-HYBRIDFESTSTOFF MIT EINER AZIDFUNKTION SOWIE VERFAHREN ZU DESSEN HERSTELLUNG
NOVEL MIL-53-AL-N3 ORGANIC/INORGANIC HYBRID SOLID PROVIDED WITH AN AZIDE FUNCTION, AND METHOD FOR MANUFACTURING SAME

(30) Priorité: 23.10.2009 FR 0905105
(43) Date de publication de la demande: 29.08.2012
(73) Titulaire: IFP Énergies nouvelles, 92852 Rueil-Malmaison Cedex (FR); CNRS, 75794 Paris Cedex 16 (FR)
(72) Inventeur: SAVONNET, Marie, F-75012 Paris (FR); FARRUSSENG, David, F-69380 Belmont D'azegues (FR); PINEL, Catherine, F-69007 Lyon (FR); BAZER-BACHI, Delphine, F-69230 St-Genis-Laval (FR); BATS, Nicolas, F-69320 Feyzin (FR); LECOCQ, Vincent, F-69530 Brignais (FR)
(74) Mandataire: Guillat-Terpend, Michèle
(86) Numéro de dépôt international: PCT/FR2010/000667
(87) Numéro de publication internationale: WO 2011/048280

(56) Documents cités:
- SAVONNET, M. ET AL.: "Generic Postfunctionalization Route from Amino-Derived Metal-Organic Frameworks", JOURNAL OF THE AMERICAN CHEMICAL SOCIETY, vol. 132, no. 13, 7 avril 2010 (2010-04-07), pages 4518-4519, XP002584326,
- WANG, Z. ET AL.: "Accessing postsynthetic modification in a series of metal-organic frameworks and the influence of framework topology on reactivity", INORGANIC CHEMISTRY, vol. 48, 2009, pages 296-306, XP002584327, cité dans la demande
- AHNFELDT, T. ET AL.: "Synthesis and modification of a functionalized 3D open-framework structure with MIL-53 topology", INORGANIC CHEMISTRY, vol. 48, 6 avril 2009 (2009-04-06), pages 3057-3064, XP002584359, cité dans la demande

## Description

### Domaine technique de l'invention

La présente invention se rapporte à un nouveau solide hybride cristallisé à matrice organique-inorganique, de structure tridimensionnelle, et à son procédé de préparation à partir du solide hybride cristallisé à matrice organique-inorganique MIL-53-Al-NH₂ déjà décrit dans la littérature. Ledit nouveau solide, objet de la présente invention, porte une fonction azoture et est appelé dans la suite de la description MIL-53-Al-N₃. Ledit solide MIL-53-Al-N₃ présente une structure cristalline identique à celle du solide MIL-53-Al-NH₂ dont il est issu par une méthode de fonctionnalisation post-synthèse. Ledit solide MIL-53-Al-N₃ est avantageusement utilisé dans des applications en tant que catalyseur ou adsorbant ou encore en tant qu'intermédiaire pour l'obtention de solides hybrides cristallisés à matrice organique-inorganique fonctionnalisés.

### État de l'art

La modification de matériaux par fonctionnalisation est une étape souvent nécessaire pour l'élaboration de solides possédant les propriétés adéquates pour une application donnée. En effet, il peut être souhaitable d'améliorer les propriétés physico-chimiques d'un matériau, en modifiant sa surface par exemple, afin que les nouvelles propriétés obtenues après modifications soient plus appropriées pour des applications en séparation ou en catalyse.
L'un des moyens couramment employé pour modifier la surface d'un matériau consiste à faire réagir les groupements fonctionnels initialement présents à sa surface par des entités possédant les fonctions souhaitées pour l'application envisagée. Les fonctions présentes à la surface d'un matériau peuvent être des groupements hydroxyles (-OH) ou tout autre groupement (amino -NH₂ ou -NH- par exemple) que l'on souhaite modifier afin d'orienter la réactivité chimique de la surface du matériau. Les réactifs employés posséderont les fonctionnalités nécessaires pour réagir avec les groupes présents initialement à la surface du matériau, et le résultat de la réaction sera un nouveau groupement chimique possédant la réactivité désirée. Un exemple d'une telle transformation consiste à faire réagir les groupements hydroxyles de la surface d'une silice par un silane portant une fonction amine (D. Brunel, Microporous and Mesoporous Materials, 1999, 27, 329-344). Ainsi, la fonction hydroxyle est transformée en fonction amine plus apte à catalyser des réactions basiques ou à capter du CO₂ par exemple. Cette méthodologie est applicable à tout matériau possédant initialement des fonctions réactives. Ces matériaux peuvent être des oxydes, des zéolithes ou encore des matériaux hybrides organiques/inorganiques, encore appelés polymères de coordination.

Ces polymères de coordination, dont les premiers ont été décrits dans les années 1960, font l'objet d'un nombre croissant de publications. En effet, l'effervescence autour de ces matériaux a permis d'atteindre une diversité structurale avancée en peu de temps (Férey G., l'actualité chimique, janvier 2007, n°304). Conceptuellement, les solides hybrides poreux à matrice mixte organique-inorganique sont assez semblables aux solides poreux à squelette inorganique. Comme ces derniers, ils associent des entités chimiques en donnant naissance à une porosité. La principale différence réside dans la nature de ces entités. Cette différence est particulièrement avantageuse et est à l'origine de toute la versatilité de cette catégorie de solides hybrides. En effet, la taille des pores devient, par l'utilisation de ligands organiques, ajustable par le biais de la longueur de la chaîne carbonée desdits ligands organiques. La charpente, qui dans le cas des matériaux poreux inorganiques, ne peut accepter que quelques éléments (Si, Al, Ge, Ga, éventuellement Zn) peut, dans ce cas, accueillir tous les cations à l'exception des alcalins. Pour la préparation de ces matériaux hybrides, aucun agent structurant spécifique n'est requis, le solvant joue cet effet à lui seul.
Il apparaît donc clairement que cette famille de matériaux hybrides permet une multiplicité de structures et par conséquent comprend des solides finement adaptés aux applications qui leur sont destinées.

Les polymères de coordination comprennent au moins deux éléments appelés connecteurs et ligands dont l'orientation et le nombre des sites de liaisons sont déterminants dans la structure du matériau hybride. De la diversité de ces ligands et connecteurs naît, comme on l'a déjà précisé, une immense variété de matériaux hybrides.
Par ligand, on désigne la partie organique du matériau hybride. Ces ligands sont, le plus souvent, des di- ou tri-carboxylates ou des dérivés de la pyridine. Quelques ligands organiques fréquemment rencontrés sont représentés ci-après : bdc = benzène-1,4-dicarboxylate, btc = benzène-1,3,5-tricarboxylate, ndc = naphtalène-2,6-dicarboxylate, bpy = 4,4'-bipyridine, hfipbb = 4,4'-(hexafluororisopropylidene)-bisbenzoate, cyclam = 1,4,8,11-tetraazacyclotetradecane.

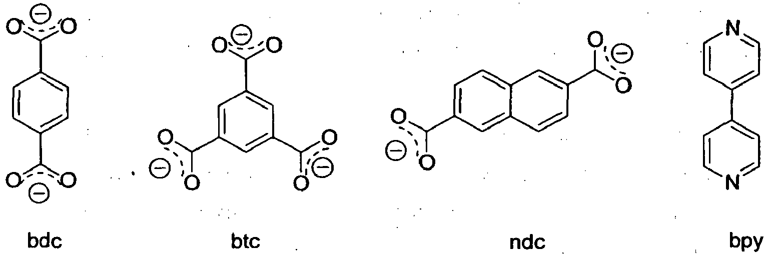

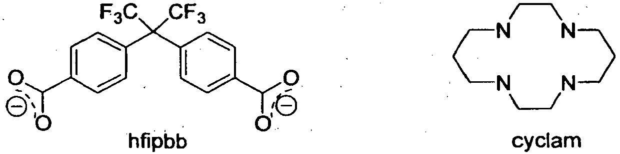

Par connecteur, on désigne l'entité inorganique du matériau hybride. Il peut s'agir d'un cation seul, d'un dimère, trimère ou tétramère ou encore d'une chaîne ou d'un plan.

Dans le cadre de la présente invention, le ligand utilisé est l'acide 2-amino-téréphtalique (NH₂-H₂-bdc). L'entité inorganique jouant le rôle de connecteur est, quant à elle, l'aluminium.

Les équipes de Yaghi et Férey ont ainsi décrit un nombre important de nouveaux matériaux hybrides (série des MOF - " Metal Organic Framework " - et série des MIL - " Matériaux de l'Institut Lavoisier " - respectivement). De nombreuses autres équipes ont suivi cette voie et aujourd'hui le nombre de nouveaux matériaux hybrides décrits est en pleine expansion. Le plus souvent, les études visent à mettre au point des structures ordonnées, présentant des volumes poreux extrêmement importants, une bonne stabilité thermique et des fonctionnalités chimiques ajustables.
Par exemple, Yaghi *et al.* décrivent une série de structures à base de bore dans la demande de brevet US 2006/0154807 et indiquent leur intérêt dans le domaine du stockage des gaz. Le brevet US 7.202.385 divulgue un récapitulatif particulièrement complet des structures décrites dans la littérature et illustre parfaitement la multitude de matériaux existant déjà à ce jour.
La préparation de matériaux hybrides organiques-inorganiques présentant une fonction organique réactive (MOF greffé) peut être mise en oeuvre par deux voies principales : la fonctionnalisation par auto-assemblage et la fonctionnalisation par post-modification. La fonctionnalisation par auto-assemblage est réalisée par la mise en présence d'un ligand organique ayant la fonction réactive (greffon) désirée et d'un composé inorganique ayant le rôle de connecteur. Cette méthode de fonctionnalisation est souvent difficile à mettre en oeuvre en raison des problèmes liés à la solubilisation et à la réactivité des ligands fonctionnalisés. En particulier, les ligands portant une fonction -OH, -COOH ou -NH₂ risquent d'interagir avec le composé inorganique (connecteur) conduisant alors à des solides non-isostructuraux au MOF de référence non greffé. La fonctionnalisation par post-modification est une méthode alternative intéressante qui ne présente pas les limites de la fonctionnalisation par auto-assemblage. La fonctionnalisation par post-modification consiste à modifier directement la fonction organique d'au moins un type de ligand présent dans le MOF par une réaction chimique (greffage), plus précisément à substituer la fonction organique initiale par une fonction organique dont la réactivité est préférée pour une application ultérieure. Cette méthode suppose la présence sur le MOF initial d'une fonction organique accessible et réactive pour le greffage. Dans la littérature, les matériaux hybrides organiques-inorganiques portant un ligand avec une fonction amino -NH₂ tel que le DMOF-1-NH₂ (Z. Q. Wang ; K. K. Tanabe, S. M. Cohen, Inorganic Chemistry, 2009, 48, 296-306) sont décrits comme de bons supports pour le greffage de nombreuses fonctions, notamment les aldéhydes, les isocyanates et les anhydrides d'acide.

### Description de l'invention

La présente invention a pour objet un nouveau solide hybride cristallisé à matrice organique-inorganique présentant une structure tridimensionnelle. Ce nouveau solide est appelé MIL-53-Al-N₃. Il contient un réseau inorganique de centres métalliques à base d'aluminium connectés entre eux par des ligands organiques constitués par l'entité -O₂C-C₆H₃-N₃-CO₂-.

Le solide hybride cristallisé MIL-53-Al-N₃ selon l'invention présente un diagramme de diffraction des rayons X incluant au moins les raies inscrites dans le tableau 1. Ce diagramme de diffraction est obtenu par analyse radiocristallographique au moyen d'un diffractomètre en utilisant la méthode classique des poudres avec le rayonnement Kα1 du cuivre (λ=1,5406Å). A partir de la position des pics de diffraction représentée par l'angle 2θ, on calcule, en appliquant la relation de Bragg, les équidistances réticulaires dₕₖₗ caractéristiques de l'échantillon. L'erreur de mesure Δ(dₕₖₗ) sur dₕₖₗ est calculée grâce à la relation de Bragg en fonction de l'erreur absolue Δ(2θ) affectée à la mesure de 2θ. Une erreur absolue de Δ(2θ) égale à ±0,02° est communément admise. L'intensité relative I/I₀ affectée à chaque valeur de dₕₖₗ est mesurée d'après la hauteur du pic de diffraction correspondant. Le diagramme de diffraction des rayons X du solide hybride cristallisé MIL-53-Al-N₃ selon l'invention comporte au moins les raies aux valeurs de dₕₖₗ données dans le tableau 1. Dans la colonne des dₕₖₗ, on a indiqué les valeurs moyennes des distances inter-réticulaires en Angstrôms (Å). Chacune de ces valeurs doit être affectée de l'erreur de mesure Δ(dₕₖₗ) comprise entre ±0.3 Å et ±0,01 Å.

**Tableau 1 : Valeurs moyennes des dₕₖₗ et intensités relatives mesurées sur un diagramme de diffraction de rayons X du solide hybride cristallisé MIL-53-Al-N₃.**

| 2 Thêta (°) | dₕₖₗ (Å) | I/I₀ | 2 Thêta (°) | dₕₖₗ (Å) | I/I₀ |
|---|---|---|---|---|---|
| 9,36 | 9,44 | mf | 29,63 | 3,01 | f |
| 11,94 | 7,40 | FF | 32,86 | 2,72 | f |
| 17,34 | 5,11 | F | 33,55 | 2,67 | ff |
| 17,83 | 4,97 | mf | 34,84 | 2,57 | ff |
| 19,92 | 4,45 | f | 36,04 | 2,49 | ff |
| 22,06 | 4,03 | f | 40,54 | 2,22 | ff |
| 23,98 | 3,71 | mf | 40,89 | 2,21 | ff |
| 25,31 | 3,52 | f | 44,29 | 2,04 | ff |
| 26,36 | 3,38 | mf | 51,02 | 1,79 | ff |

| | | | | | |
|---|---|---|---|---|---|
| où FF = très fort ; F = fort ; m = moyen ; mf = moyen faible ; f = faible ; ff = très faible. L'intensité relative I/I₀ est donnée en rapport à une échelle d'intensité relative où il est attribué une valeur de 100 à la raie la plus intense du diagramme de diffraction de rayons X : ff < 15 ; 15 ≤ f < 30 ; 30 ≤ mf < 50 ; 50 ≤ m < 65 ; 65 ≤ F < 85 ; FF ≥ 85. | | | | | |

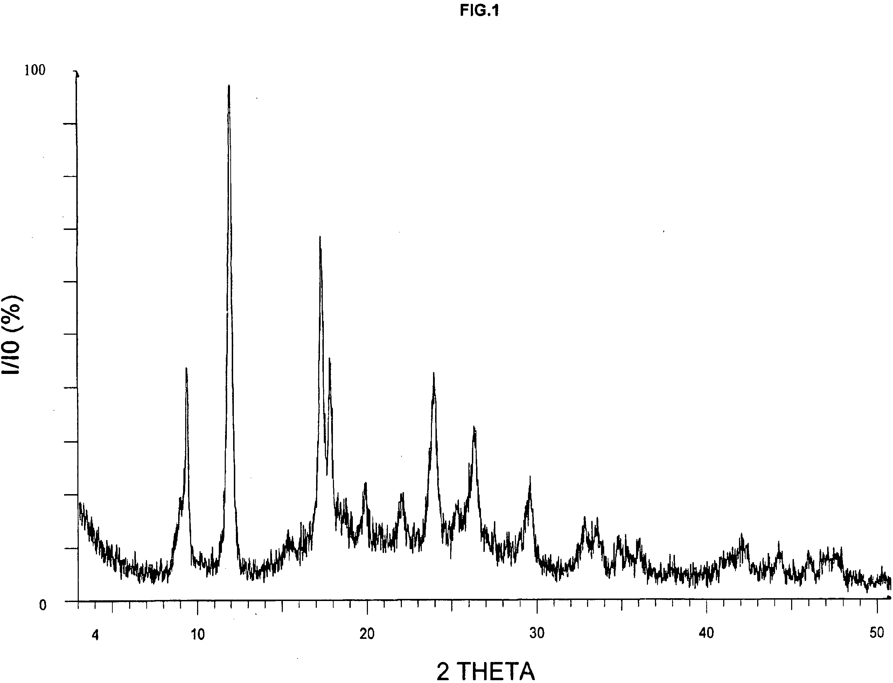

Le solide hybride cristallisé MIL-53-Al-N₃ selon l'invention présente une structure cristalline de base ou topologie qui est caractérisée par son diagramme de diffraction X donné par la figure 1. La structure cristalline du solide hybride cristallisé MIL-53-Al-N₃ selon l'invention est identique à celle présentée par le solide hybride cristallisé MIL-53-Al-NH₂ décrit dans la littérature (T. Ahnfeldt; D. Gunzelmann; T. Loiseau; D. Hirsemann; J. Senker; G. Ferey, N. Stock, Inorganic Chemistry, 2009, 48, 7, 3057-3064.) et duquel ledit solide MIL-53-Al-N₃ est issu, conformément au procédé de préparation décrit plus bas dans la présente description.

Le solide hybride cristallisé MIL-53-Al-N₃ selon l'invention présente une structure tridimensionnelle dans laquelle le réseau inorganique formé de centres métalliques à base de cations Al³⁺ jouant le rôle de connecteurs sont liés entre eux par des ligands téréphtaliques déprotonés (-O₂C-C₆H₃-N₃-CO₂-) portant une fonction azoture N₃ sur le cycle aromatique. Une caractéristique essentielle du solide hybride cristallisé MIL-53-Al-N₃ selon l'invention réside dans la présence de la fonction azoture sur le cycle aromatique de chacun des ligands téréphtaliques déprotonés, plus précisément appelés ligands 2-azido-téréphtalate (noté N₃-bdc). La structure obtenue, identique à celle du solide MIL-53-Al-NH₂, est une structure tridimensionnelle dans laquelle les chaînes inorganiques unidimensionnelles à motif -AI-O(H)- sont liées entre elles par les ligands téréphtaliques déprotonés (O₂C-C₆H₃-N₃-CO₂). Chaque atome d'aluminium est hexacoordiné et est entouré de deux atomes d'oxygène des groupements hydroxyles se situant en position apicale et de quatre atomes d'oxygène issus de quatre ligands téréphtaliques déprotonés N₃-bdc se localisant en position équatoriale. De plus, chaque ligand organique est relié à quatre atomes d'aluminium (deux couples d'atomes d'aluminium voisins).

Le solide hybride cristallisé MIL-53-Al-N₃ selon l'invention présente ainsi une composition chimique ayant pour motif de base Al(OH)(-O₂C-C₆H₃-N₃-CO₂-). Ce motif est répété n fois, la valeur de n dépendant de la cristallinité dudit solide.
Le solide hybride cristallisé MIL-53-Al-N₃ selon l'invention a également été caractérisé par Spectroscopie Infra Rouge à Transformée de Fourier (FT IR) et par ¹H RMN de manière à vérifier la présence de la fonction azoture sur chacun des ligands téréphtaliques déprotonés. Ainsi le spectre obtenu par FT IR présente une bande caractéristique de la fonction azoture à 2122 cm⁻¹. L'analyse ¹H RMN est réalisée sur un échantillon dudit solide hybride MIL-53-Al-N₃ selon l'invention, après digestion et dissolution totale dudit échantillon dans un mélange deutéré DCI/D₂O/DMSO-*d*₆ selon un mode opératoire décrit dans la littérature (Z. Q. Wang, S. M. Cohen, Journal of the American Chemical Society, 2007, 129, 12368-12369). Couplée à l'analyse par FTIR, analyse ¹H-RMN confirme la présence de la fonction azoture N₃ sur le cycle aromatique du ligand téréphtalique déprotoné : δ = 7,73-7,83 ppm, m, 3H, ArH. Les 3 protons conduisant à la détection du multiplet correspondent aux 3 protons portés par le cycle aromatique du ligand 2-azido-téréphtalate (N₃-bdc).

La présente invention a également pour objet un procédé de préparation du solide hybride cristallisé MIL-53-Al-N₃. Ledit solide MIL-53-Al-N₃ est préparé à partir du solide hybride cristallisé MIL-53-Al-NH₂ décrit dans la littérature (T. Ahnfeldt; D. Gunzelmann; T. Loiseau; D. Hirsemann; J. Senker; G. Ferey, N. Stock, Inorganic Chemistry, 2009, 48, 7,3057-3064.) Ledit solide MIL-53-Al-NH₂ présente une structure tridimensionnelle dans laquelle les chaînes inorganiques unidimensionnelles à motif -Al-O(H)- sont liées entre elles par les ligands 2- aminotéréphtalate portant une fonction amine -NH₂ sur le cycle aromatique (O₂C-C₆H₃-NH₂-CO₂, ligand NH₂-BDC). Chaque atome d'aluminium est hexacoordiné et est entouré de deux atomes d'oxygène des groupements hydroxyles se situant en position apicale et de quatre atomes d'oxygène issus de quatre ligands 2- aminotéréphtalate se localisant en position équatoriale. De plus, un ligand organique est relié à quatre atomes d'aluminium (deux couples d'atomes d'aluminium voisins). Le solide hybride cristallisé MIL-53-Al-NH₂ présente une composition chimique ayant pour motif de base Al(OH)(-O₂C-C₆H₃-NH₂-CO₂-). Ce motif est répété n fois, la valeur de n dépendant de la cristallinité dudit solide.

Une méthode de préparation dudit solide MIL-53-Al-NH₂ est décrite dans la littérature (T. Ahnfeldt; D. Gunzelmann; T. Loiseau; D. Hirsemann; J. Senker; G. Ferey, N. Stock, Inorganic Chemistry, 2009, 48, 7,3057-3064.) Le procédé de préparation de l'invention permet la substitution de la fonction amine -NH₂ présente dans le solide MIL-53-Al-NH₂ par la fonction azoture N₃. Le procédé de préparation selon l'invention comprend au moins les étapes suivantes :
i/ introduction, dans un solvant polaire S, d'au moins dudit solide hybride cristallisé MIL-53-Al-NH₂, d'au moins un composé organique Q contenant une fonction azoture N₃ et d'au moins un réactif intermédiaire R contenant une fonction nitrite NO₂ dans une proportion telle que le mélange réactionnel présente la composition molaire suivante, basée sur un équivalent molaire de la fonction -NH₂ présente dans le solide MIL-53-Al-NH₂ 1 MIL-53-Al-NH₂: 45 -135 R : 40 -120 Q : 100-400 S
ii/ réaction dudit mélange réactionnel à une température comprise entre 0 et 100 °C pendant une durée comprise entre 1 et 24 heures pour obtenir ledit solide hybride cristallisé MIL-53-Al-N₃
iii/ filtration puis lavage dudit solide hybride cristallisé MIL-53-Al-N₃,
iv/ séchage dudit solide hybride cristallisé MIL-53-Al-N₃.

Conformément à ladite étape i) dudit procédé de préparation du solide hybride cristallisé MIL-53-Al-N₃ selon l'invention, ledit solide hybride cristallisé MIL-53-Al-NH₂ est préalablement séché avant d'être introduit dans ledit solvant polaire. Le séchage dudit solide hybride cristallisé MIL-53-Al-NH₂ est avantageusement réalisé à une température comprise entre 20 et 100 °C pendant une durée comprise entre 1 et 24 heures, très avantageusement pendant une durée d'environ 12 heures. Le séchage est effectué sous air ou sous vide, de manière préférée sous vide.

Conformément à ladite étape i) du procédé de préparation selon l'invention, ledit composé organique Q contenant une fonction azoture N₃ est avantageusement choisi parmi l'azoture de triméthylsilyle (TMS-N3, (CH₃)₃SiN₃), l'azoture de triflyle (TfN₃, où Tf = CF₃SO₂), l'azoture de p-tosyle (TsN₃, ou 4-méthylbenzènesulfonylazide de formule C₆H₄(CH₃)SO₂N₃) et l'azoture de sodium (NaN₃). De manière préférée, ledit composé organique Q contenant une fonction N₃ est l'azoture de triméthylsilyle (TMS-N₃).
Conformément à ladite étape i) du procédé de préparation selon l'invention, ledit réactif intermédiaire R contenant une fonction nitrite NO₂ est avantageusement choisi parmi des réactifs alcalins comme le nitrite de sodium (NaNO₂) et le nitrite de calcium (Ca(NO₂)₂), des réactifs métalliques et des réactifs de type alcoyle tel que le tert-butyl-nitrite (tBuONO, (CH₃)₃CONO). De manière très préférée, ledit réactif intermédiaire R contenant une fonction nitrite NO₂ est le tert-butyl-nitrite (tBuONO). Ledit réactif intermédiaire R contenant une fonction nitrite NO₂ assure la formation d'un sel de diazonium qui réagit ensuite avec le composé organique Q.

Le solvant polaire S employé dans ladite étape i) du procédé de préparation selon l'invention est préférentiellement volatil. Il est très avantageusement choisi parmi le tétrahydrofurane (THF), l'acétonitrile et l'éthanol.

Conformément à ladite étape i) du procédé de préparation selon l'invention, le mélange réactionnel présente préférentiellement la composition molaire suivante, basée sur un équivalent molaire de la fonction -NH₂ présente dans le solide MIL-53-Al-NH₂ :
1 MIL-53-Al-NH₂: 70-110 R : 60-100 Q : 100-200 S

Ladite étape de réaction conformément à ladite étape ii) du procédé de préparation selon l'invention est préférentiellement réalisée à une température comprise entre 0 et 60°C, et de façon encore préférée à température ambiante. Le mélange réactionnel est agité à l'aide d'un agitateur magnétique. La durée de réaction est comprise entre 1 et 24 heures, préférentiellement entre 5 et 15 heures, le plus souvent environ 12 heures. Le solide obtenu à l'issue de ladite étape ii) est un solide hybride cristallisé MIL-53-Al-N₃ présentant un diagramme de diffraction des rayons X incluant au moins les raies inscrites dans le tableau 1.

Conformément à ladite étape iii) du procédé de préparation selon l'invention, ledit solide hybride cristallisé MIL-53-Al-N₃ obtenu à l'issue de ladite étape ii) est filtré puis lavé avec des solvants adaptés. Le lavage dudit solide MIL-53-Al-N₃ est préférentiellement mis en oeuvre par une première séquence de lavages au moyen de solvants polaires, par exemple l'éthanol, suivis d'une deuxième séquence de lavages au moyen de solvants volatils, par exemple le dichlorométhane. On procède, par exemple, à l'étape de lavage dudit solide hybride cristallisé MIL-53-Al-N₃ en réalisant 3 séquences de lavage à l'éthanol suivies de 3 séquences de lavage au dichlorométhane CH₂Cl₂.
Conformément à ladite étape iv) du procédé de préparation selon l'invention, ledit solide hybride cristallisé MIL-53-Al-N₃ est séché. Le séchage est réalisé sous air ou sous vide entre 20°C et 100°C. De manière préférée, le séchage est réalisé à température ambiante sous vide pendant une durée variant entre 1 et 24 heures, le plus souvent environ 12 heures.

Le solide obtenu à l'issue de l'étape iv) est identifié comme étant le solide hybride cristallisé MIL-53-Al-N₃ selon l'invention. Les analyses réalisées sur le solide obtenu à l'issue du procédé de préparation selon l'invention démontrent l'efficacité du traitement par post-modification. En particulier, l'analyse réalisée sur le solide hybride cristallisé MIL-53-Al-N₃ par DRX démontre que le traitement de fonctionnalisation par post-modification permettant de substituer la fonction amino - NH₂ par la fonction azoture -N₃ n'affecte pas la structure et la cristallinité du solide. L'analyse par FT-IR révèle la présence de la fonction azoture -N₃ sur chacun des ligands téréphtalates dans le solide MIL-53-Al-N₃. Couplée à l'analyse par FT IR, l'analyse ¹H RMN confirme la présence de la fonction azoture -N₃ sur chacun des ligands téréphtalates dans le solide MIL-53-Al-N₃ et permet d'estimer le taux de modification des fonctions amino en fonctions azotures N₃. Conformément au procédé de préparation selon l'invention, ce taux de modification est très élevé, c'est-à-dire au moins égal à 95 %, de préférence au moins égal à 98%. Le taux de modification est calculé en quantifiant la décroissance de l'aire relative des signaux des protons aromatiques de la forme MIL-53-Al-NH₂ par rapport à ceux de la forme MIL-53-Al-N₃. Le spectre ¹H RMN du solide MIL-53-Al-N₃ selon l'invention présente de nouveaux signaux liés à l'apparition d'un multiplet intégrant pour 3 protons, lesquels correspondent aux 3 protons portés par le cycle aromatique du ligand 2-azido-téréphtalate (N₃-bdc).

### Exemples

Les solides hybrides cristallisés MIL-53-Al-NH₂ et MIL-53-Al-N₃ obtenus à l'issue de la mise en oeuvre des protocoles de préparation illustrés par les exemples 1 et 2 suivants ont été analysés par diffraction des rayons X, par spectroscopie infrarouge à transformée de Fourrier (IRTF) et par résonance magnétique nucléaire de l'hydrogène (¹H RMN).

Les diagrammes de diffraction des rayons X sont obtenus par analyse radiocristallographique en utilisant la méthode classique des poudres au moyen d'un diffractomètre Bruker D5005 (CuKα₁₊₂= 0.15418 nm) équipé d'un monochromateur arrière courbe graphite et d'un détecteur à scintillation. Les analyses des solides ont été enregistrées en mode Debye-Scherrer de 3 à 80° (2θ) avec un pas de 0,02° pendant 8 secondes.
Les analyses infra rouge sont réalisées à l'aide de pastilles KBr sur un appareil FTIR Vector 22 Bruker avec une gamme de fonctionnement utile de : 4000-400 cm⁻¹.
Les spectres de Résonance Magnétique Nucléaire en solution sont obtenus à l'aide d'un Spectromètre de RMN Bruker Avance 250 (5,87 T, 250 MHz pour ¹H).

### Exemple 1 : Préparation du solide hybride cristallisé MIL-53-Al-NH₂

120 mg (0,66 mmol) d'acide 2-amino-1,4-benzène dicarboxylique (Alfa Aesar, 99%) en suspension dans 28 mL (1,55 mmol) d'eau distillée sont placés dans un récipient en PTFE de 40 mL de volume intérieur, 1.10 mL (0,44 mmol) d'une solution de chlorure d'aluminium hydraté (AlCl₃.6H₂O, Aldrich, 98%) de concentration 0.4 mol/L et 0.56 mL (0,22 mmol) d'une solution de NaOH de concentration 0.4 mol/L y sont ajoutés. Le mélange est agité pendant 5 minutes à l'aide d'un agitateur magnétique. Le récipient en PTFE est alors transvasé dans un autoclave puis chauffé sans agitation à 110°C pendant 24 h. Après refroidissement, le solide cristallisé obtenu est lavé à l'eau, puis avec une solution à chaud de DMF (Aldrich, 99.8%) et au dichlorométhane (ACROS ORGANICS, 99.99%). Après séchage à l'étuve (air) à 80°C pendant une nuit, on obtient une poudre constituée de cristaux de MIL-53-Al-NH₂.
Ledit solide hybride cristallisé MIL-53-Al-NH₂ est analysé par diffraction des rayons X, par spectroscopie infrarouge à transformée de Fourrier et par résonance magnétique nucléaire de l'hydrogène (¹H RMN).
L'analyse par diffraction des rayons X révèle que ledit solide obtenu à l'exemple 1 est identifié comme étant constitué de solide MIL-53-Al-NH₂: le diffractogramme effectué sur ledit solide est identique à celui correspondant au solide MIL-53-Al-NH₂ (It) présenté dans Inorganic Chemistry, 2009, 48, 7,3057-3064.
L'analyse par FT-IR révèle la présence de la fonction amino -NH₂ dans le solide MIL-53-Al-NH₂.
IR (Pastille de KBr), υ (cm⁻¹): 3498, 3386, 2951, 1685 1581, 1487, 1436, 1402, 1333, 1256, 1000, 777, 640, 597, 546, 452. Les bandes à 3498 et 3386 cm⁻¹ sont attribuées à la fonction amine.
L'analyse ¹H RMN est réalisée sur un échantillon du solide MIL-53-Al-NH₂, après digestion et dissolution totale de l'échantillon dans un mélange deutéré DCI/D₂OIDMSO-*d*₆ selon le mode opératoire décrit dans la littérature (Z. Q. Wang, S. M. Cohen, Journal of the American Society, 2007, 129, 12368-12369) : 10 mg de solide hybride MIL-53-Al-NH₂ sont digérés et dissous dans 1,5 mL de DMSO deutéré et 0,2 mL d'une solution diluée de DCI (préparée à partir d'une solution contenant 0,23mL de DCl/D₂O à 35% et 1mL de DMSO deutéré).
Couplée à l'analyse par FT IR, l'analyse ¹H RMN révèle également la présence du groupement amino - NH₂ dans le solide MIL-53-Al-NH₂. ¹H RMN, 250 MHz, t.a, δ (ppm / (DCI/D₂O/DMSO-*d₆*)) : 6.90 (d, 1H, J = 8 Hz); 7,03 (s, 1H); 7,56 (d, 1H, J = 8 Hz).

### Exemple 2 : Préparation du solide MIL-53-Al-N₃ par post-modification du solide hybride MIL-53-Al-NH₂.

80 mg (0,36 mmol équivalent -NH₂) de solide MIL-53-Al-NH₂, obtenu à l'issue du procédé illustré dans l'exemple 1, sont séchés pendant 12 heures à 85°C sous vide puis sont placés dans un pilulier (capacité 8 mL) avec 3 mL (51.3 mmol, 142.5 eq) d'éthanol (Fluka, 99.8%), 3.8 mL (32 mmol, 89 eq) de tBuONO (Aldrich, 90%) et 3.6 mL (28 mmol, 78 eq) de TMS-N₃ (Aldrich, 95%). Après 12 heures de réaction à température ambiante, le solide est filtré puis lavé trois fois avec 8 mL d'éthanol (Fluka, 99,8%) puis trois fois avec 8 mL de CH₂Cl₂ (ACROS ORGANICS, 99.99%) avant d'être séché sous vide à température ambiante pendant 12 heures.
Le solide obtenu a été analysé par diffraction des rayons X et identifié comme étant constitué de solide hybride cristallisé MIL-53-Al-N₃: le diffractogramme effectué sur le solide MIL-53-Al-N₃ est celui donné par la figure 1. L'analyse réalisée sur le solide hybride cristallisé MIL-53-Al-N₃ par DRX démontre que le traitement de post-modification permettant de substituer la fonction amino - NH₂ par la fonction azoture -N₃ n'affecte pas la structure et la cristallinité du solide.
L'analyse par FT-IR révèle la présence du groupement azoture -N₃ sur chacun des ligands téréphtalates dans le solide MIL-53-Al-N₃. Le spectre obtenu par FT IR présente une bande caractéristique de la fonction azoture à 2122 cm⁻¹. Les bandes à 3498 et 3386 cm⁻¹ correpondant à la fonction -NH₂ ont disparu.
L'analyse ¹H RMN est réalisée sur un échantillon du solide hybride MIL-53-Al-N₃, après digestion et dissolution totale de l'échantillon dans un mélange deutéré DCI/D₂OIDMSO-*d*₆ selon un mode opératoire décrit dans la littérature (Z. Q. Wang, S. M. Cohen, Journal of the American Chemical Society, 2007, 129, 12368-12369) : 10 mg de solide hybride MIL-53-Al-N₃ sont digérés et dissous dans 1,5 mL de DMSO deutéré et 0,2 mL d'une solution diluée de DCI (préparée à partir d'une solution contenant 0,23 mL de DCl/D₂O à 35% et 1 mL de DMSO deutéré).
L'analyse ¹H RMN confirme la présence de la fonction azoture N₃ sur le cycle aromatique du ligand téréphtalique déprotoné. ¹H RMN, 250 MHz, t.a, δ (ppm / (DCl/D₂O/DMSO-*d₆*)) : δ = 7,73-7,83 ppm, m, 3H, ArH. Les 3 protons conduisant à la détection du multiplet correspondent aux 3 protons portés par le cycle aromatique du ligand 2-azido-téréphtalate (N₃-bdc).
La comparaison des spectres IR et ¹H RMN obtenus pour le solide MIL-53-Al-NH₂ et pour le solide MIL-53-Al-N₃ démontre l'efficacité dudit traitement de post-modification, la comparaison des spectres ¹H RMN obtenus pour le solide MIL-53-Al-NH₂ et pour le solide MIL-53-Al-N₃ permettant d'estimer à 98% le taux de modification des fonctions amino en fonctions azotures N₃, en quantifiant la décroissance de l'aire relative des signaux du solide MIL-53-Al-NH₂ par rapport à ceux du solide MIL-53-Al-N₃.

## Revendications

1. Solide hybride cristallisé à matrice organique-inorganique MIL-53-Al-N₃, de structure tridimensionnelle, contenant un réseau inorganique de centres métalliques à base d'aluminium connectés entre eux par des ligands organiques constitués par l'entité -O₂C-C₆H₃-N₃-CO₂- (ligand N₃-bdc), ledit solide présentant un diagramme de diffraction des rayons X incluant au moins les raies inscrites dans le tableau ci-dessous :
| 2 Thêta (°) | dₕₖₗ (Å) | I/I₀ | 2 Thêta (°) | dₕₖₗ (Å) | I/I₀ |
|---|---|---|---|---|---|
| 9,36 | 9,44 | mf | 29,63 | 3,01 | f |
| 11,94 | 7,40 | FF | 32,86 | 2,72 | f |
| 17,34 | 5,11 | F | 33,55 | 2,67 | ff |
| 17,83 | 4,97 | mf | 34,84 | 2,57 | ff |
| 19,92 | 4,45 | f | 36,04 | 2,49 | ff |
| 22,06 | 4,03 | f | 40,54 | 2,22 | ff |
| 23,98 | 3,71 | mf | 40,89 | 2,21 | ff |
| 25,31 | 3,52 | f | 44,29 | 2,04 | ff |
| 26,36 | 3,38 | mf | 51,02 | 1,79 | ff |
| | | | | | |
|---|---|---|---|---|---|
| où FF = très fort ; F = fort ; m = moyen ; mf = moyen faible ; f = faible ; ff = très faible, l'intensité relative I/I₀ étant donnée en rapport à une échelle d'intensité relative où il est attribué une valeur de 100 à la raie la plus intense du diagramme de diffraction de rayons X : ff < 15 ; 15 ≤ f < 30 ; 30 ≤ mf < 50 ; 50 ≤ m < 65 ; 65 ≤ F < 85 ; FF ≥ 85. | | | | | |

2. Solide hybride cristallisé MIL-53-Al-N₃ selon la revendication 1 tel qu'il présente une structure cristalline identique à celle du solide hybride cristallisé MIL-53-Al-NH₂.

3. Solide hybride cristallisé MIL-53-Al-N₃ selon la revendication 1 ou la revendication 2 tel que chaque ligand organique est relié à quatre atomes d'aluminium.

4. Solide hybride cristallisé MIL-53-Al-N₃ selon l'une des revendications 1 à 3 tel que chaque atome d'aluminium est entouré de deux atomes d'oxygène des groupements hydroxyles se situant en position apicale et de quatre atomes d'oxygène issus de quatre ligands téréphtaliques déprotonés N₃-bdc se localisant en position équatoriale.

5. Solide hybride cristallisé MIL-53-Al-N₃ selon l'une des revendications 1 à 4 tel qu'il présente une composition chimique ayant pour motif de base Al(OH)(-O₂C-C₆H₃-N₃-CO₂-).

6. Procédé de préparation d'un solide hybride cristallisé MIL-53-Al-N₃ à partir d'un solide hybride cristallisé MIL-53-Al-NH₂ comprenant au moins les étapes suivantes :
i/ introduction, dans un solvant polaire S, d'au moins dudit solide hybride cristallisé MIL-53-Al-NH₂, d'au moins un composé organique Q contenant une fonction azoture N₃ et d'au moins un réactif intermédiaire R contenant une fonction nitrite NO₂ dans une proportion telle que le mélange réactionnel présente la composition molaire suivante, basée sur un équivalent molaire de la fonction -NH₂ présente dans le solide MIL-53-Al-NH₂ :
1 MIL-53-Al-NH₂: 45 -135 R : 40 -120 Q : 100-400 S
ii/ réaction dudit mélange réactionnel à une température comprise entre 0 et 100 °C pendant une durée comprise entre 1 et 24 heures pour obtenir ledit solide hybride cristallisé MIL-53-Al-N3,
iii/ filtration puis lavage dudit solide hybride cristallisé MIL-53-Al-N₃,
iv/ séchage dudit solide hybride cristallisé MIL-53-Al-N₃.

7. Procédé de préparation selon la revendication 6 tel que ledit solide hybride cristallisé MIL-53-Al-NH₂ est préalablement séché avant d'être introduit dans ledit solvant polaire.

8. Procédé de préparation selon la revendication 6 ou la revendication 7 tel que ledit composé organique Q contenant une fonction azoture N₃ est choisi parmi l'azoture de triméthylsilyle (TMS-N₃), l'azoture de triflyle (TfN₃), l'azoture de p-tosyle (TsN₃) et l'azoture de sodium (NaN₃).

9. Procédé de préparation selon l'une des revendications 6 à 8 tel que ledit réactif intermédiaire R contenant une fonction nitrite NO₂ est le tert-butyl-nitnte (tBuONO).

10. Procédé de préparation selon l'une des revendications 6 à 9 tel que ledit solvant polaire S est choisi parmi le tétrahydrofurane (THF), l'acétonitrile et l'éthanol.

11. Procédé de préparation selon l'une des revendications 6 à 10 tel que ledit mélange réactionnel présente la composition molaire suivante, basée sur un équivalent molaire de la fonction -NH₂ présente dans le solide MIL-53-Al-NH₂ :
1 MIL-53-Al-NH₂: 70-110 R : 60-100 Q : 100-200 S

12. Procédé de préparation selon l'une des revendications 6 à 11 tel que ladite étape ii) est réalisée à température ambiante.

13. Procédé de préparation selon l'une des revendications 6 à 12 tel que la durée de ladite étape ii) est comprise entre 5 et 15 heures.

## Patentansprüche

1. Kristallisierter MIL-53-Al-N₃-Hybridfeststoff mit organisch-anorganischer Matrix mit dreidimensionaler Struktur, der ein anorganisches Netzwerk mit Metallzentren auf der Basis von Aluminium enthält, die miteinander durch organische Liganden verbunden sind, die aus der Spezies -O₂C-C₆H₃-N₃-CO₂- (Ligand N₃-bdc) bestehen, wobei der Feststoff ein Röntgenbeugungsdiagramm aufweist, das mindestens die Peaks enthält, die in der nachfolgenden Tabelle eingetragen sind:
| 2 Theta (°) | dₕₖₗ (Å) | I/I₀ | 2 Theta (°) | dₕₖₗ (Å) | I/I₀ |
|---|---|---|---|---|---|
| 9,36 | 9,44 | mf | 29,63 | 3,01 | f |
| 11,94 | 7,40 | FF | 32,86 | 2,72 | f |
| 17,34 | 5,11 | F | 33,55 | 2,67 | ff |
| 17,83 | 4,97 | mf | 34,84 | 2,57 | ff |
| 19,92 | 4,45 | f | 36,04 | 2,49 | ff |
| 22,06 | 4,03 | f | 40,54 | 2,22 | ff |
| 23,98 | 3,71 | mf | 40,89 | 2,21 | ff |
| 25,31 | 3,52 | f | 44,29 | 2,04 | ff |
| 26,36 | 3,38 | mf | 51,02 | 1,79 | ff |
| | | | | | |
|---|---|---|---|---|---|
| wobei FF = sehr stark; F = stark; m = mittel; mf = mittelschwach; f = schwach; ff = sehr schwach, wobei die relative Intensität I/I₀ bezogen auf eine relative Intensitätsskala angegeben wird, wobei dem intensivsten Peak des Röntgenbeugungsdiagramms ein Wert von 100 zugeschrieben wird: ff < 15 ; 15 ≤ f < 30 ; 30 ≤ mf < 50 ; 50 ≤ m < 65 ; 65 ≤ F < 85 ; FF ≥ 85. | | | | | |

2. Kristallisierter MIL-53-Al-N₃-Hybridfeststoff nach Anspruch 1, wobei er eine Kristallstruktur aufweist, die mit der des kristallisierten MIL-53-Al-NH₂-Hybridfeststoffs identisch ist.

3. Kristallisierter MIL-53-Al-N₃-Hybridfeststoff nach Anspruch 1 oder Anspruch 2, wobei jeder organische Ligand mit vier Aluminiumatomen verbunden ist.

4. Kristallisierter MIL-53-Al-N₃₋Hybridfeststoff nach einem der Ansprüche 1 bis 3, wobei jedes Aluminiumatom von zwei Sauerstoffatomen der Hydroxylgruppen, die sich an apikaler Position befinden, und von vier Sauerstoffatomen, die aus vier deprotonierten Terephtal-Liganden N₃-bdc stammen, die an äquatorialer Position liegen, umgeben ist.

5. Kristallisierter MIL-53-Al-N₃-Hybridfeststoff nach einem der Ansprüche 1 bis 4, wobei er eine chemische Zusammensetzung aufweist, die als Grundeinheit Al(OH)(-O₂C-C-CH₃-N₃-CO₂-) aufweist.

6. Verfahren zur Herstellung eines kristallisierten MIL-53-Al-N₃-Hybridfeststoffs aus einem kristallisierten MIL-53-Al-NH₂-Hybridfeststoff, das mindestens die folgenden Schritte umfasst:
i/ Einführen, in ein polares Lösemittel S, mindestens des kristallisierten, hybriden MIL-53-Al-NH₂, mindestens einer organischen Verbindung Q, enthaltend eine Azidfunktion N₃ und mindestens eines Zwischenreagens R, enthaltend eine Nitritfunktion NO₂ in einem solchen Anteil, dass das Reaktionsgemisch die folgende Molzusammensetzung, basierend auf einem Moläquivalent der Funktion -NH₂, die in dem MIL-53-AI-NH₂-F eststoff vorhanden ist, aufweist:
1 MIL-53-Al-NH₂: 45 -135 R : 40 -120 Q : 100-400 S
ii/ Umsetzen des Reaktionsgemischs bei einer Temperatur im Bereich zwischen 0 und 100 °C für eine Dauer im Bereich zwischen 1 und 24 Stunden, um den kristallisierten, MIL-53-Al-N₃-Hybridfeststoff zu erhalten,
iii/ Filtern, dann Waschen des kristallisierten MIL-53-Al-N3-Hybridfeststoffs,
iv/ Trocknen des kristallisierten MIL-53-Al-N₃-Hybridfeststoff.

7. Verfahren zur Herstellung nach Anspruch 6, wobei der kristallisierte MIL-53-Al-NH₂-Hybridfeststoff vorher getrocknet wird, bevor er in das polare Lösemittel eingeführt wird.

8. Verfahren zur Herstellung nach Anspruch 6 oder Anspruch 7, wobei die organische Verbindung Q, die eine Azidfunktion N₃ enthält, aus Trimethylsilylazid (TMS-N₃), Triflylazid (TfN₃), p-Tosylazid (TsN₃) und Natriumazid (NaN₃) ausgewählt ist.

9. Verfahren zur Herstellung nach einem der Ansprüche 6 bis 8, wobei das Zwischenreagens R, das eine Nitritfunktion NO₂ enthält, tert-Butylnitrit (tBuONO) ist.

10. Verfahren zur Herstellung nach einem der Ansprüche 6 bis 9, wobei das polare Lösemittel S aus Tetrahydrofuran (THF), Acetonitril und Ethanol ausgewählt ist.

11. Verfahren zur Herstellung nach einem der Ansprüche 6 bis 10, wobei das Reaktionsgemisch die folgende Molzusammensetzung, basierend auf einem Moläquivalent der Funktion -NH₂, die in dem MIL-53-Al-NH₂-Feststoff vorhanden ist, aufweist:
1 MIL-53-Al-NH₂: 70-110 R : 60-100 Q : 100-200 S

12. Verfahren zur Herstellung nach einem der Ansprüche 6 bis 11, wobei der Schritt ii) bei Umgebungstemperatur ausgeführt wird.

13. Verfahren zur Herstellung nach einem der Ansprüche 6 bis 12, wobei die Dauer von Schritt ii) im Bereich zwischen 5 und 15 Stunden liegt.

## Claims

1. MIL-53-Al-N₃ crystallized hybrid solid with an organic-inorganic matrix, of a three-dimensional structure, containing an inorganic network of aluminum-based metal centers that are connected to one another by organic ligands that consist of the entity -O₂C-C₆H₃-N₃-CO₂- (N₃-bdc ligand), whereby said solid exhibits an X-ray diffraction diagram that includes at least the lines that are recorded in the table below:
| 2 Theta (°) | dₕₖₗ (Å) | I/I₀ | 2 Theta (°) | dₕₖₗ (Å) | I/I₀ |
|---|---|---|---|---|---|
| 9.36 | 9.44 | mf | 29.63 | 3.01 | f |
| 11.94 | 7.40 | FF | 32.86 | 2.72 | f |
| 17.34 | 5.11 | F | 33.55 | 2.67 | ff |
| 17.83 | 4.97 | mf | 34.84 | 2.57 | ff |
| 19.92 | 4.45 | f | 36.04 | 2.49 | ff |
| 22.06 | 4.03 | f | 40.54 | 2.22 | ff |
| 23.98 | 3.71 | mf | 40.89 | 2.21 | ff |
| 25.31 | 3.52 | f | 44.29 | 2.04 | ff |
| 26.36 | 3.38 | mf | 51.02 | 1.79 | ff |
| | | | | | |
|---|---|---|---|---|---|
| where FF = Very High; F = High; m = Medium; mf = Medium Low; f = Low; and ff = Very Low, with the relative intensity I/I₀ being provided in relation to a relative intensity scale where a value of 100 is assigned to the most intense line of the X-ray diffraction diagram: ff < 15; 15 ≤ f < 30; 30 ≤ mf < 50; 50 ≤ m < 65; 65 ≤ F < 85; and FF ≥ 85. | | | | | |

2. MIL-53-Al-N₃ crystallized hybrid solid according to Claim 1, such that it exhibits a crystalline structure that is identical to the one of the MIL-53-Al-NH₂ crystallized hybrid solid.

3. MIL-53-Al-N₃ crystallized hybrid solid according to Claim 1 or Claim 2, such that each organic ligand is connected to four aluminum atoms.

4. MIL-53-Al-N₃ crystallized hybrid solid according to one of Claims 1 to 3, such that each aluminum atom is surrounded by two oxygen atoms of hydroxyl groups that are located in apical position and four oxygen atoms that are obtained from four N₃-bdc deprotonated terephthalic ligands that are located in equatorial position.

5. MIL-53-Al-N₃ crystallized hybrid solid according to one of Claims 1 to 4, such that it exhibits a chemical composition that has Al(OH)(-O₂C-C₆H₃-N₃-CO₂-) for a base pattern.

6. Process for the preparation of an MIL-53-Al-N₃ crystallized hybrid solid starting from an MIL-53-Al-NH₂ crystallized hybrid solid that comprises at least the following stages:
i/ Introduction, into a polar solvent S, of at least said MIL-53-Al-NH₂ crystallized hybrid solid, at least one organic compound Q that contains an N₃ azide group, and at least one intermediate reagent R that contains an NO₂ nitrite group in a proportion such that the reaction mixture has the following molar composition, based on a molar equivalent of the - NH₂ group that is present in the MIL-53-Al-NH₂ solid:
1 MIL-53-Al-NH₂ : 45-135 R : 40-120 Q : 100-400 S
ii/ Reaction of said reaction mixture at a temperature of between 0 and 100°C for a period of between 1 and 24 hours to obtain said MIL-53-Al-N₃ crystallized hybrid solid,
iii/ Filtration, and then washing of said MIL-53-Al-N₃ crystallized hybrid solid,
iv/ Drying of said MIL-53-Al-N₃ crystallized hybrid solid.

7. Process for preparation according to Claim 6, such that said MIL-53-Al-NH₂ crystallized hybrid solid is dried in advance before being introduced into said polar solvent.

8. Process for preparation according to Claim 6 or Claim 7, such that said organic compound Q that contains an N₃ azide group is selected from among trimethylsilyl azide (TMS-N₃), triflyl azide (TfN₃), p-tosyl azide (TsN₃), and sodium azide (NaN₃).

9. Process for preparation according to one of Claims 6 to 8, such that said intermediate reagent R that contains an NO₂ nitrite group is tert-butyl-nitrite (tBuONO).

10. Process for preparation according to one of Claims 6 to 9, such that said polar solvent S is selected from among tetrahydrofuran (THF), acetonitrile and ethanol.

11. Process for preparation according to one of Claims 6 to 10, such that said reaction mixture has the following molar composition, based on a molar equivalent of the -NH₂ group that is present in the MIL-53-Al-NH₂ solid:
1 MIL-53-Al-NH₂ : 70-110 R : 60-100 Q : 100-200 S

12. Process for preparation according to one of Claims 6 to 11, such that said stage ii) is implemented at ambient temperature.

13. Process for preparation according to one of Claims 6 to 12, such that the period of said stage ii) is between 5 and 15 hours.
